# DEMANDE DE BREVET EUROPEEN

(11) **EP 4 683 042 A1**
(43) Date de publication de la demande: **21.01.2026**
(21) Numéro de dépôt: 25181819.1
(22) Date de dépôt: 10.06.2025
(51) Int. Cl.: H01M 10/613, B60H 1/00, B60L 50/64, H01M 10/625, H01M 10/6563, H01M 10/6566, H01M 10/663

(54) **VEHICULE AUTOMOBILE ELECTRIQUE OU HYBRIDE COMPORTANT UNE BATTERIE EN DEUX PARTIES ET PROCEDE ASSOCIE**

(30) Priorité: 17.07.2024 FR 2407813
(71) Demandeur: Stellantis Auto SAS, 78300 Poissy (FR); FCA US LLC, Auburn Hills, MI 48326-2766 (US)
(72) Inventeur: BERTHIER, NICOLAS, 78150 Le Chesnay (FR); NOVATI, JEAN, 78420 Carrieres Sur Seine (FR); RICCO, RAFFAELE, 70010 Casamassima (IT)
(74) Mandataire: PSIP

(57) **Abrégé**

L'invention concerne un véhicule automobile électrique ou hybride comportant un bac de batterie (1) comprenant une batterie (2), ledit véhicule comportant un dispositif chauffage-ventilation-climatisation (3) et un conduit (4) reliant ledit dispositif chauffage-ventilation-climatisation (3) et ledit bac de batterie (1), caractérisé en ce que ladite batterie (2) comporte une partie supérieure (2a) et une partie inférieure (2b), le bac de batterie (1) comportant un premier passage d'air au-dessus de la partie supérieure (2a), un deuxième passage d'air entre la partie supérieure (2a) et la partie inférieure (2b) et un troisième passage d'air en dessous de la partie inférieure (2b), ledit conduit (4) comportant une trappe (5) et un ventilateur (6).

## Description

L'invention porte sur le refroidissement, ou le réchauffage, des batteries de véhicules automobiles électriques ou hybrides.

Il est connu de l'art antérieur différents moyens pour assurer le maintien à température des batteries de traction automobiles. Le refroidissement par plaque consiste à utiliser une plaque collée au-dessus ou en dessous du bac de batterie, traversée par un fluide caloporteur comme de l'eau glycolée, pour réguler la température. Cette méthode, bien que maîtrisée en termes de coût, nécessite de la place en épaisseur. Le refroidissement immersif implique de plonger la batterie dans un liquide diélectrique en mouvement, refroidi ou chauffé à l'extérieur du bac de batterie, offrant une bonne gestion thermique au prix d'une augmentation de la masse et de la complexité du système. Enfin, le refroidissement par air utilise de l'air, conditionné ou non, pour refroidir la batterie, soit en contact direct avec les cellules, soit en circulant autour du bac de batterie. Bien que cette méthode soit moins coûteuse, ses performances sont limitées et peuvent dépendre du flux d'air généré par la vitesse du véhicule.

L'objectif de la présente invention est de remédier à ces inconvénients et de permettre le maintien à une température optimale de la batterie à moindre coût sans alourdir, voire en allégeant, le véhicule automobile.

Pour atteindre cet objectif, l'invention propose un véhicule automobile électrique ou hybride comportant un bac de batterie comprenant une batterie, ledit véhicule comportant un train de roulement avant et un train de roulement arrière dont les points de contact avec le sol définissent un plan de base défini par une première direction longitudinale correspondant au roulage en ligne droite, par une deuxième direction transversale et orthogonale à la première direction longitudinale et une troisième direction verticale orthogonale à la première direction et à la deuxième direction et est orientée en s'éloignant du sol, ledit véhicule comportant un dispositif chauffage-ventilation-climatisation et un conduit reliant ledit dispositif chauffage-ventilation-climatisation et ledit bac de batterie, remarquable en ce que ladite batterie comporte une partie supérieure et une partie inférieure, la partie supérieure étant positionnée au dessus de la partie inférieure selon la troisième direction, la partie supérieure étant positionnée à une distance non nulle prédéterminée de la partie inférieure, le bac de batterie comportant un premier passage d'air au dessus de la partie supérieure, un deuxième passage d'air entre la partie supérieure et la partie inférieure et un troisième passage d'air en dessous de la partie inférieure, ledit conduit comportant une trappe et un ventilateur, ledit ventilateur étant positionné en regard dudit bac de batterie, ladite trappe étant positionnée entre le dispositif chauffage-ventilation-climatisation et ledit ventilateur, ladite trappe étant apte à s'ouvrir pour faire entrer l'air extérieur ou à se fermer.

Grâce à l'invention, le refroidissement de la batterie peut être assuré à la fois par l'entrée d'air extérieur via la trappe ou par le dispositif chauffage-ventilation-climatisation.

Avantageusement, la partie supérieure et la partie inférieure comportent chacune des cellules électrochimiques, ladite partie supérieure comportant un couvercle supérieur positionné au dessus desdites cellules électrochimiques de la partie supérieure, ladite partie inférieure comportant un couvercle inférieur positionné en dessous desdites cellules électrochimiques de la partie inférieure.

Cette configuration permet la circulation de l'air au dessus et en dessous de chaque partie de la batterie. Ainsi, chaque extrémité des cellules électrochimiques est exposée à l'air. Le refroidissement ou le réchauffage de ladite batterie est alors amélioré.

Avantageusement, le couvercle supérieur et le couvercle inférieur comportent de l'aluminium.

L'aluminium est un bon conducteur thermique. De plus, l'aluminium présente une grande résistance aux températures extrêmes.

De préférence, le couvercle supérieur et le couvercle inférieur comportent chacun quatre moyens de fixation configurés pour fixer ledit bac de batterie dans ledit véhicule.

Avantageusement, le premier passage d'air, le deuxième passage d'air et le troisième passage d'air présentent chacun une hauteur de 10 mm selon la troisième direction.

Il s'agit d'une hauteur suffisante pour faire circuler l'air dans les passages d'air, sans pour autant augmenter de façon significative la hauteur de ladite batterie.

De préférence, ladite batterie comporte des ailettes.

La présence d'ailettes augmente la surface d'échange avec l'air dudit bac de batterie, et donc l'efficacité du refroidissement ou de réchauffage de la batterie.

De préférence, ledit conduit comporte une première partie parallélépipédique et une deuxième partie infundibuliforme, la deuxième partie présentant une première section et une deuxième section, la première section étant positionnée entre ledit ventilateur et ledit bac de batterie, la deuxième section étant positionnée entre la première section et ledit bac de batterie, la deuxième section présentant des dimensions supérieures aux dimensions de la première section.

Cette configuration permet une meilleure répartition de l'air dans ledit bac de batterie, à travers les passages d'air.

En outre, l'invention concerne un procédé de refroidissement de la batterie d'un véhicule automobile électrique ou hybride précédemment décrit, ladite batterie comportant un premier capteur de mesure de la température, ledit véhicule comportant un deuxième capteur de mesure de la température extérieure, remarquable en ce que ledit procédé comporte les étapes suivantes :
- une étape de mesure de la température de ladite batterie par ledit au moins un premier capteur de mesure de la température, la trappe étant fermée ;
- une étape de mesure de la température extérieure par ledit deuxième capteur de mesure de la température ;
- une étape de calcul de la différence de température entre la température extérieure et la température de ladite batterie lorsque la température de ladite batterie est supérieure à une première valeur seuil prédéterminée, la différence de température étant déterminée en valeur absolue ;
- une étape d'ouverture de la trappe lorsque la différence de température est supérieure à une deuxième valeur seuil prédéterminée ou une étape d'actionnement dudit dispositif chauffage-ventilation-climatisation lorsque la différence de température est inférieure à la deuxième valeur seuil prédéterminée.

Le procédé permet une gestion appropriée de l'état, ouvert ou fermé, de la trappe et de l'activation ou non du dispositif chauffage-ventilation-climatisation.

L'invention sera davantage détaillée par la description de modes de réalisation non limitatifs, et sur la base des figures annexées illustrant des variantes de l'invention, dans lesquelles :
- [Fig.1] illustre schématiquement un bac de batterie lorsque le refroidissement de la batterie est assuré par un système chauffage-ventilation-climatisation ;
- [Fig.2] illustre schématiquement le bac de batterie illustré sur la figure 1 lorsque le refroidissement de la batterie est assuré par une trappe.

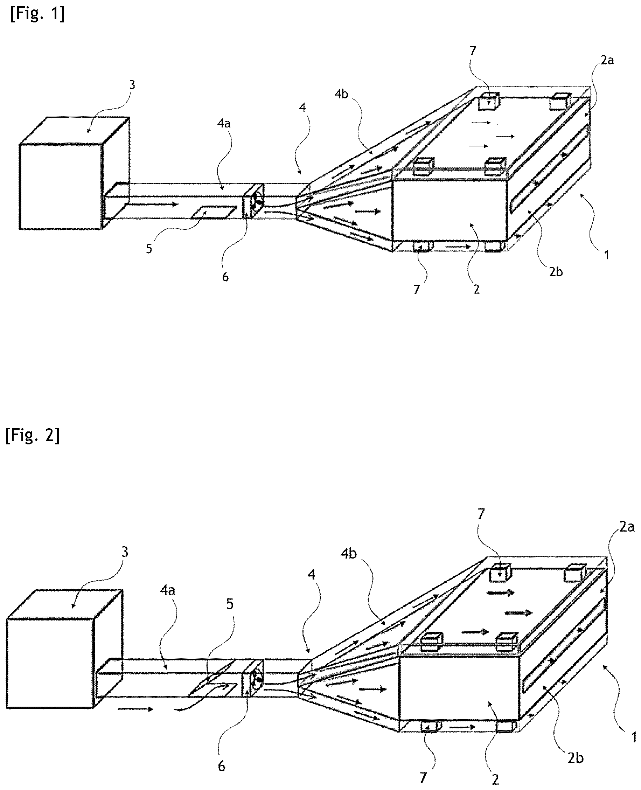

Il est illustré schématiquement sur la figure 1 un bac de batterie 1 d'un véhicule automobile électrique ou hybride. Le bac de batterie 1 comporte une batterie 2 de traction. Le véhicule comporte un train de roulement avant et un train de roulement arrière dont les points de contact avec le sol définissent un plan de base XY défini par une première direction X longitudinale correspondant au roulage en ligne droite, par une deuxième direction Y transversale et orthogonale à la première direction longitudinale X et une troisième direction Z verticale orthogonale à la première direction X et à la deuxième direction Y et est orientée en s'éloignant du sol. La batterie 2 comporte une partie supérieure 2a et une partie inférieure 2b. La partie supérieure est positionnée au dessus de ladite partie inférieure 2b selon la troisième direction Z. Ainsi, le bac de batterie 1 comporte un premier passage d'air au dessus de ladite partie supérieure 2a, un deuxième passage d'air entre ladite partie supérieure 2a et ladite partie inférieure 2b et un troisième passage d'air en dessous de ladite partie inférieure 2b. De préférence, le premier passage d'air, le deuxième passage d'air et le troisième passage d'air présentent chacun une hauteur de 10 mm. Optionnellement, la partie supérieure 2a et la partie inférieure 2b comportent chacune des cellules électrochimiques permettant le stockage de l'énergie électrique sous une forme chimique. La partie supérieure 2a comporte éventuellement un couvercle supérieur positionné au dessus desdites cellules électrochimiques de la partie supérieure 2a. De plus, la partie inférieure 2b comportent un couvercle inférieur positionné en dessous desdites cellules électrochimiques de la partie inférieure 2b. De préférence, le couvercle supérieur et le couvercle inférieur sont en aluminium et comportent chacun quatre moyens de fixation pour fixer ledit bac de batterie 1 dans ledit véhicule. Ainsi, l'agencement du bac de batterie 1 dans le véhicule est facilité. Le véhicule comporte un dispositif chauffage-ventilation-climatisation 3 et un conduit 4 reliant ledit dispositif chauffage-ventilation-climatisation 3 et ledit bac de batterie 1. Le conduit 4 comporte une trappe 5 apte à s'ouvrir et à se fermer. Sur la figure 1, la trappe 5 est fermée. Par conséquent, l'air pénètre dans ledit conduit 4 par l'intermédiaire du dispositif chauffage-ventilation-climatisation 3. Il peut s'agir d'air conditionné ou non. Les flèches représentées sur la figure 1 représente le trajet de l'air. Lorsque le refroidissement ou le chauffage de la batterie 2 est assuré par le dispositif chauffage-ventilation-climatisation 3, le véhicule peut être en état de fonctionnement ou à l'arrêt. En outre, ledit conduit 4 comporte un ventilateur 6. Ainsi, lorsque de l'air pénètre dans ledit conduit 4, le ventilateur dirige l'air vers ledit bac de batterie 1 afin de procéder au refroidissement ou au réchauffage de ladite batterie 2 en fonction de la température de l'air. Suite à son entrée dans le bac de batterie, l'air traverse le premier passage d'air, le deuxième passage d'air et le troisième passage d'air. Ainsi, les cellules électrochimiques, positionnées verticalement selon la troisième direction Z dans ladite batterie 2, sont refroidies ou réchauffées par leurs extrémités supérieures et par leurs extrémités inférieures, ce qui améliore l'efficacité du refroidissement ou du réchauffage. Optionnellement, ladite batterie 2 comporte des ailettes de façon à augmenter la surface d'échange entre ladite batterie 2 et l'air présent dans ledit bac de batterie 1. Ainsi, le refroidissement ou le réchauffage de la batterie 2 est amélioré du fait de l'engouffrement de l'air dans lesdites ailettes. De préférence, le conduit 4 comporte une première partie 4a parallélépipédique et une deuxième partie 4b infundibuliforme. La deuxième partie 4b comprend une première section et une deuxième section. La première section est positionnée en regard dudit ventilateur 6, tandis que la deuxième section est positionnée entre ladite première section et ledit bac de batterie 1. La deuxième section, plus proche du bac de batterie 1 par rapport à la première section, présente des dimensions plus importantes que la première section, qui est plus proche de la première partie 4a du conduit 4.

Sur la figure 2, la trappe 5 est ouverte de façon que l'air extérieur pénètre dans ledit conduit 4 et est dirigé vers le bac de batterie 1, par l'intermédiaire dudit ventilateur 6. Le fait d'utiliser l'air extérieur pour refroidir ladite batterie 2 permet d'économiser le courant électrique car le dispositif chauffage-ventilation-climatisation 3 est éteint. Pour permettre l'entrée d'air dans ladite trappe 5, il est préférable que ledit véhicule soit en état de fonctionnement. Le refroidissement de ladite batterie 1 par l'air extérieur est particulièrement efficace lorsque le véhicule roule à grande vitesse, sur une autoroute par exemple. En effet, du fait de la vitesse du véhicule, l'air entre en plus grande quantité dans le conduit 4 via ladite trappe 5.

L'invention concerne également un procédé de refroidissement dudit véhicule automobile électrique ou hybride précédemment décrit. La batterie 2 comporte alors un premier capteur de mesure de la température, qui est configuré pour mesurer la température à l'intérieur de ladite batterie 2 afin de détecter un éventuel échauffement ou un refroidissement trop important. De plus, ledit véhicule comporte un deuxième capteur de mesure de la température extérieure. Il s'agit de la température de l'environnement entourant ledit véhicule. Le deuxième capteur de mesure de la température peut être localisé, par exemple, au niveau de la carrosserie dudit véhicule. Le procédé comporte une étape de mesure de la température de la batterie par ledit premier capteur de mesure de la température et une étape de mesure de la température extérieure par ledit deuxième capteur de mesure de la température. Lors de l'étape de mesure de la température de ladite batterie 2 et lors de l'étape de la mesure de la température extérieure, la trappe 5 est fermée. Par défaut, ladite trappe 5 est toujours fermée pour éviter une perte d'aérodynamisme du véhicule. Lors d'une étape de calcul de la différence de température, la différence entre la température extérieure et la température de la batterie est calculée en valeur absolue lorsque la température de ladite batterie est supérieure à une première valeur seuil prédéterminée. Le procédé comporte une étape d'ouverture de ladite trappe 5 lorsque la différence de température est supérieure à une deuxième valeur seuil prédéterminée. Alternativement, ledit procédé comporte une étape d'actionnement du dispositif chauffage-ventilation-climatisation 3 lorsque la différence de température est inférieure à la deuxième valeur seuil prédéterminée. Le procédé permet la gestion de l'état, ouvert ou fermé, de ladite trappe 5 et du fonctionnement du dispositif chauffage-ventilation-climatisation 3.

## Revendications

1. Véhicule automobile électrique ou hybride comportant un bac de batterie (1) comprenant une batterie (2), ledit véhicule comportant un train de roulement avant et un train de roulement arrière dont les points de contact avec le sol définissent un plan de base (XY) défini par une première direction (X) longitudinale correspondant au roulage en ligne droite, par une deuxième direction (Y) transversale et orthogonale à la première direction longitudinale (X) et une troisième direction (Z) verticale orthogonale à la première direction (X) et à la deuxième direction (Y) et est orientée en s'éloignant du sol, ledit véhicule comportant un dispositif chauffage-ventilation-climatisation (3) et un conduit (4) reliant ledit dispositif chauffage-ventilation-climatisation (3) et ledit bac de batterie (1), **caractérisé en ce que** ladite batterie (2) comporte une partie supérieure (2a) et une partie inférieure (2b), la partie supérieure (2a) étant positionnée au dessus de la partie inférieure (2b) selon la troisième direction (Z), la partie supérieure (2a) étant positionnée à une distance non nulle prédéterminée de la partie inférieure (2b), le bac de batterie (1) comportant un premier passage d'air au dessus de la partie supérieure (2a), un deuxième passage d'air entre la partie supérieure (2a) et la partie inférieure (2b) et un troisième passage d'air en dessous de la partie inférieure (2b), ledit conduit (4) comportant une trappe (5) et un ventilateur (6), ledit ventilateur (6) étant positionné en regard dudit bac de batterie (1), ladite trappe (5) étant positionnée entre le dispositif chauffage-ventilation-climatisation (3) et ledit ventilateur (6), ladite trappe (5) étant apte à s'ouvrir pour faire entrer l'air extérieur ou à se fermer.

2. Véhicule selon la revendication 1 **caractérisé en ce que** la partie supérieure (2a) et la partie inférieure (2b) comportent chacune des cellules électrochimiques, ladite partie supérieure (2a) comportant un couvercle supérieur positionné au dessus desdites cellules électrochimiques de la partie supérieure (2a), ladite partie inférieure (2b) comportant un couvercle inférieur positionné en dessous desdites cellules électrochimiques de la partie inférieure (2b).

3. Véhicule selon la revendication 2 **caractérisé en ce que** le couvercle supérieur et le couvercle inférieur comportent de l'aluminium.

4. Véhicule selon la revendication 2 ou 3 **caractérisé en ce que** le couvercle supérieur et le couvercle inférieur comportent chacun quatre moyens de fixation (7) configurés pour fixer ledit bac de batterie (1) dans ledit véhicule.

5. Véhicule selon l'une quelconque des revendications 1 à 4 **caractérisé en ce que** le premier passage d'air, le deuxième passage d'air et le troisième passage d'air présentent chacun une hauteur de 10 mm selon la troisième direction (Z).

6. Véhicule selon l'une quelconque des revendications 1 à 5 **caractérisé en ce que** ladite batterie (2) comporte des ailettes.

7. Véhicule selon l'une quelconque des revendications 1 à 6 **caractérisé en ce que** ledit conduit (4) comporte une première partie (4a) parallélépipédique et une deuxième partie (4b) infundibuliforme, la deuxième partie (4b) présentant une première section et une deuxième section, la première section étant positionnée entre ledit ventilateur (6) et ledit bac de batterie (1), la deuxième section étant positionnée entre la première section et ledit bac de batterie (1), la deuxième section présentant des dimensions supérieures aux dimensions de la première section.

8. Procédé de refroidissement de la batterie (2) d'un véhicule automobile électrique ou hybride selon l'une quelconque des revendications 1 à 7, ladite batterie (2) comportant un premier capteur de mesure de la température, ledit véhicule comportant un deuxième capteur de mesure de la température extérieure, **caractérisé en ce que** ledit procédé comporte les étapes suivantes :
- une étape de mesure de la température de ladite batterie (2) par ledit au moins un premier capteur de mesure de la température, la trappe (5) étant fermée ;
- une étape de mesure de la température extérieure par ledit deuxième capteur de mesure de la température ;
- une étape de calcul de la différence de température entre la température extérieure et la température de ladite batterie lorsque la température de ladite batterie est supérieure à une première valeur seuil prédéterminée, la différence de température étant déterminée en valeur absolue ;
- une étape d'ouverture de la trappe (5) lorsque la différence de température est supérieure à une deuxième valeur seuil prédéterminée ou une étape d'actionnement dudit dispositif chauffage-ventilation-climatisation (3) lorsque la différence de température est inférieure à la deuxième valeur seuil prédéterminée.
